# EUROPEAN PATENT SPECIFICATION

(11) **EP 1 376 537 B1**
(45) Date of publication and mention of the grant of the patent: **08.04.2009**
(21) Application number: 03253002.4
(22) Date of filing: 14.05.2003
(51) Int. Cl.: G10L 15/14

(54) **Apparatus, method, and computer-readable recording medium for recognition of keywords from spontaneous speech**
Vorrichtung, Verfahren und computerlesbares Aufzeichnungsmedium zur Erkennung von Schlüsselwörtern in spontaner Sprache
Appareil, méthode et support d'enregistrement lisible par ordinateur pour la reconnaissance de mots-clefs dans la parole spontanée

(30) Priority: 27.05.2002 JP 2002152645; 27.05.2002 JP 2002152646
(43) Date of publication of application: 02.01.2004
(73) Proprietor: Pioneer Corporation, Meguro-ku, Tokyo (JP)
(72) Inventor: Kobayashi, Hajime, c/o Pioneer Corporation, Tsurugashima-shi, Saitama-ken (JP); Toyama, Soichi, c/o Pioneer Corporation, Tsurugashima-shi, Saitama-ken (JP)
(74) Representative: Haley, Stephen

(56) References cited:
- EP-A- 0 800 158
- BOURLARD H ET AL: "Optimizing recognition and rejection performance in wordspotting systems" ACOUSTICS, SPEECH, AND SIGNAL PROCESSING, 1994. ICASSP-94., 1994 IEEE INTERNATIONAL CONFERENCE ON ADELAIDE, SA, AUSTRALIA 19-22 APRIL 1994, NEW YORK, NY, USA,IEEE, 19 April 1994 (1994-04-19), pages I-373-I-376, XP010133517 ISBN: 0-7803-1775-0
- WILPON J G ET AL: "AUTOMATIC RECOGNITION OF KEYWORDS IN UNCONSTRAINED SPEECH USING HIDDEN MARKOV MODELS" IEEE TRANSACTIONS ON ACOUSTICS, SPEECH AND SIGNAL PROCESSING, IEEE INC. NEW YORK, US, vol. 38, no. 11, 1 November 1990 (1990-11-01), pages 1870-1878, XP000171007 ISSN: 0096-3518

## Description

The present invention relates to a technical field regarding speech recognition by an HMM (Hidden Markov Models) method and, particularly, to a technical field regarding recognition of keywords from spontaneous speech.

In recent years, speech recognition apparatus have been developed which recognize spontaneous speech uttered by man. When a man speaks predetermined words, these devices recognize the spoken words from their input signals.

For example, various devices equipped with such a speech recognition apparatus, such as a navigation system mounted in a vehicle for guiding the movement of the vehicle and personal computer, will allow the user to enter various information without the need for manual keyboard or switch selecting operations.

Thus, for example, the operator can enter desired information in the navigation system even in a working environment where the operator is driving the vehicle by using his/her both hands

Typical speech recognition methods include a method which employs probability models known as HMM (Hidden Markov Models).

In the speech recognition, the spontaneous speech is recognized by matching patterns of feature values of the spontaneous speech with patterns of feature values of speech which are prepared in advance and represent candidate words called keywords.

Specifically, in the speech recognition, feature values of inputted spontaneous speech (input signals) divided into segments of a predetermined duration are extracted by analyzing the inputted spontaneous speech, the degree of match (hereinafter referred to as likelihood) between the feature values of the input signals and feature values of keywords represented by HMMs prestored in a database is calculated, likelihood over the entire spontaneous speech is accumulated, and the keyword with the highest likelihood as a recognized keyword is decided.

Thus, in the speech recognition, the keywords is recognized based on the input signals which is spontaneous speech uttered by man.

Incidentally, an HMM is a statistical source model expressed as a set of transitioning states. It represents feature values of predetermined speech to be recognized such as a keyword. Furthermore, the HMM is generated based on a plurality of speech data sampled in advance.

It is important for such speech recognition how to extract keywords contained in spontaneous speech.

Beside keywords, spontaneous speech generally contains extraneous speech, i.e. previously known words that is unnecessary in recognition (words such as "er" or "please" before and after keywords), and in principle, spontaneous speech consists of keywords sandwiched by extraneous speech.

Conventionally, speech recognition often employs "word-spotting" techniques to recognize keywords to be speech-recognized.
in the word-spotting techniques, HMMs which represent not only keyword models but also and HMMs which represent extraneous speech models (hereinafter referred to as garbage models) are prepared, and spontaneous speech is recognized by recognizing a keyword models, garbage models, or combination thereof whose feature values have the highest likelihood.

Thus, the word spotting techniques recognize a keyword model, extraneous-speech model, or combination thereof whose feature values have the highest likelihood based on the accumulated likelihood and outputs any keyword contained in the spontaneous speech as a recognized keyword.

In speech'recognition based on word spotting, a probability model known as a Filler model can be used to construct an extraneous-speech model.

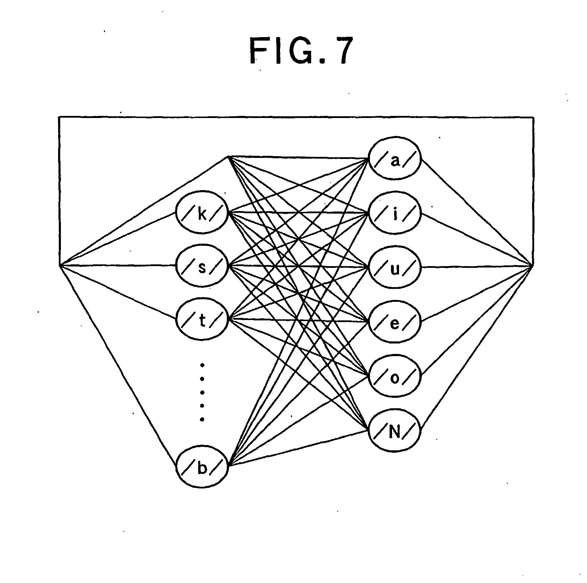

As shown in FIG. 7, to model entire speech, a Filler model represents all possible connections of vowels and consonants by a network. For word spotting, each keyword model needs to be connected at both ends with Filler models.

Specifically, speech recognition based on Filler models involves calculating all recognizable patterns, i.e., every match between the feature values of spontaneous speech to be recognized and the feature value of each phoneme, thereby calculating connections among the phonemes in the spontaneous speech, and recognizing the extraneous speech using the optimum pattern of paths from among the paths forming the connections.

Such a speech recognition device performs matching between feature values of spontaneous speech and feature data of all possible components of extraneous speech, such as phonemes, to recognize extraneous speech. Consequently, it involves enormous amounts of computing work, resulting in heavy computing loads.

The present invention has been made in view of the above problems. Its object is to provide a speech recognition device which performs speech recognition properly at high speed by reducing computational work required to calculate likelihood during a matching process.

EP-A-0800158 discloses a word spotting technique whereby spontaneous speech is matched against data for key words.

The above object of present invention can be achieved by a speech recognition apparatus for recognizing at least one of keywords contained in uttered spontaneous speech, said apparatus comprising :
an extraction device for extracting a spontaneous-speech feature value, which is feature value of speech ingredient of the spontaneous speech, by analyzing the spontaneous speech;
a database for storing a keyword feature data which represents the feature value of the speech ingredient of a keyword;
a calculation device for calculating a keyword probability which represents the probability that said spontaneous-speech feature value corresponds to said keyword based on at least part of a speech segment extracted from the spontaneous speech and the keyword feature data stored in said database;
a setting device for setting an extraneous-speech probability which represents the probability that at least part of the speech segment extracted from the spontaneous-speech corresponds to extraneous speech based on a preset value, said extraneous speech indicating a non-keyword; and
a determination device for determining said keyword contained in the spontaneous speech based on the calculated keyword probabilities and the extraneous-speech probability which is the preset value, wherein said setting device sets a preset value representing a fixed value as said extraneous-speech probability.

The above object of the present invention can be achieved by a speech recognition method of recognizing at least one of keywords contained in uttered spontaneous speech, wherein said method comprises:
an extraction process of extracting a spontaneous-speech feature value, which is feature value of a speech ingredient of the spontaneous speech, by analyzing the spontaneous speech;
a calculation process of calculating a keyword probability which represents the probability that said spontaneous-speech feature value corresponds to said keyword based on at least part of a speech segment extracted from the spontaneous-speech and a keyword feature data stored in a database said keyword feature data representing a feature value of the speech ingredient of a keyword;
a setting process of setting extraneous-speech probability which represents the probability that at least part of the speech segment extracted from the spontaneous-speech corresponds to extraneous speech based on a preset value, said extraneous speech indicating a non-keyword; and
a determination process of determining the keyword contained in the spontaneous speech based on the calculated keyword probabilities and the extraneous-speech probability which is the preset value wherein said setting process sets the preset value representing a fixed value as said extraneous-speech probability.

According to the present invention, keyword probability which represent the probability that the spontaneous-speech feature value corresponds to the keyword feature data is calculated, and the keyword contained in the spontaneous speech is determined based on the calculated keyword probability and the preset extraneous-speech probability.

Accordingly, the extraneous speech and keyword can be identified, and the keyword can be determined without calculating characteristics of feature values including spontaneous-speech feature values and extraneous-speech feature data. Therefore, it is possible to reduce the processing load needed to calculate extraneous-speech probability and recognize the keyword contained in spontaneous speech easily at high speed.
FIG. 1 is a diagram showing an HMM-based speech language model of a recognition network;
FIG. 2 is a block diagram showing a schematic configuration of a speech recognition device using word spotting according to a first embodiment;
FIG. 3 is a flowchart showing operation of a keyword recognition process according to the first embodiment;
FIG. 4 is a diagram showing an HMM-based speech language model of a recognition network for recognizing two keywords;
FIG. 5 is a block diagram showing a schematic configuration of a speech recognition device using word spotting according to a second embodiment;
FIG. 6 is a flowchart showing operation of a keyword recognition process according to the second embodiment; and
FIG. 7 is a diagram showing a speech language model of a recognition network based on Filler models.

The present invention will now be described with reference to preferred embodiment shown in the drawings.

The embodiments described below are embodiments in which the present invention is applied to speech recognition apparatus. [First embodiment]

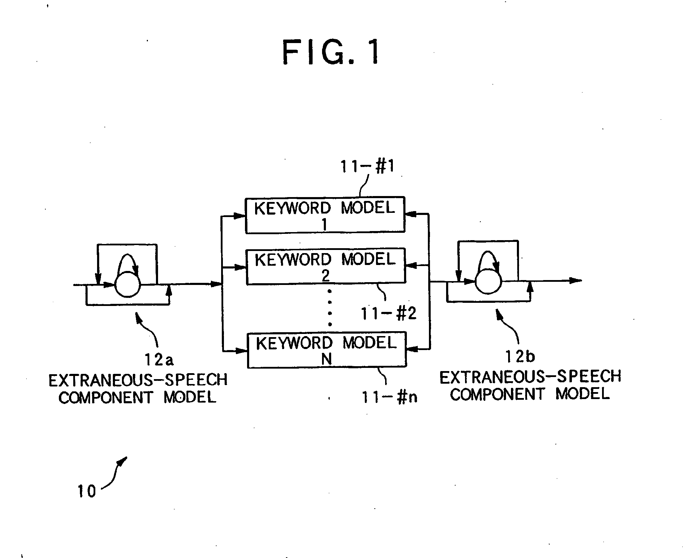

FIGS. 1 to 4 are diagrams showing a first embodiment of a speech recognition apparatus.

First, an HMM-based speech language model according to this embodiment will be described with reference to FIG. 1.

FIG. 1 is a diagram showing an HMM-based speech language model of a recognition network according to this embodiment.

This embodiment assumes a model (hereinafter referred to as a speech language model) which represents an HMM-based recognition network such as the one shown in FIG. 1, i.e., a speech language model 10 which contains keywords to be recognized.

The speech language model 10 consists of keyword models 11 connected at both ends with garbage models (hereinafter referred to as component models of extraneous-speech) 12a and 12b which represent components of extraneous speech. In case where keyword contained in spontaneous speech is recognized, a keyword contained in spontaneous speech is identified by matching the keyword with the keyword models 11, and extraneous speech contained in spontaneous speech is identified by matching the extraneous speech with the component models of extraneous-speech 12a and 12b.

Actually, the keyword models 11 and component models of extraneous-speech 12a and 12b represent a set of states which transition each arbitrary segments of spontaneous speech. The statistical source models "HMMs" which is an unsteady source represented by combination of steady sources composes the spontaneous speech.

The HMMs of the keyword models 11 (hereinafter referred to as keyword HMMs) and the HMMs of the extraneous-speech component models 12a and 12b (hereinafter referred to as extraneous-speech component HMMs) have two types of parameter. One parameter is a state transition probability which represents the probability of the state transition from one state to another, and another parameter is an output probability which outputs the probability that a vector (feature vector for each frame) will be observed when a state transitions from one state to another. Thus, the HMMs of the keyword models 11 represents a feature pattern of each keyword, and extraneous-speech component HMMs 12a and 12b represents feature pattern of each extraneous-speech component.

Generally, since even the same word or syllable shows acoustic variations for various reasons, speech sounds composing spontaneous speech vary greatly with the speaker. However, even if uttered by different speakers, the same speech sound can be characterized mainly by a characteristic spectral envelope and its time variation. Stochastic characteristic of a time-series pattern of such acoustic variation can be expressed precisely by an HMM.

Thus, as described below, according to this embodiment, keywords contained in the spontaneous speech are recognized by matching feature values of the inputted spontaneous speech with keyword HMMs and extraneous-speech HMMs and calculating likelihood.

According to this embodiment, a HMM is a feature pattern of speech ingredient of each keyword or feature value of speech ingredient of each extraneous-speech component. Furthermore, the HMM is a probability model which has spectral envelope data that represents power at each frequency at each regular time intervals or cepstrum data obtained from an inverse Fourier transform of a logarithm of the power spectrum.

Furthermore, the HMMs are created and stored beforehand in each databases by acquiring spontaneous speech data of each phonemes uttered by multiple people, extracting feature patterns of each phonemes, and learning feature pattern data of each phonemes based on the extracted feature patterns of the phonemes.

According to this embodiment, a plurality of typical extraneous-speech component HMMs are represented by the extraneous-speech component models 12a and 12b and matching is performed using the extraneous-speech component models 12a and 12b.

For example, HMMs for only the vowels "a," "i," "u," "e," and "o" and the keyword component HMMs (described later) may be used as the plurality of typical extraneous-speech component HMMs. Then, the matching is performed using these extraneous-speech component HMMs.

Details of the extraneous-speech component HMMs and the matching process will be described later.

When keywords contained in spontaneous speech are recognized by using such HMMs, the spontaneous speech to be recognized is divided into segments of a predetermined duration and each segment is matched with each prestored data of the HMMs, and then the probability of the state transition of these segments from one state to another are calculated based on the results of the matching process to identify the keywords to be recognized.

Specifically, in this embodiment, the feature value of each speech segment are compared with the each feature pattern of prestored data of the HMMs, the likelihood (corresponds to the keyword probability and extraneous-speech probability according to the present invention) for the feature value of each speech segment to match the HMM feature patterns is calculated, a matching process (described later) is performed based on the calculated likelihood and a preset value of the likelihood of a match between the speech feature value of each speech segment and feature value of extraneous speech where the value of the likelihood has been preset assuming that the given segment contains extraneous speech, and cumulative likelihood which represents the probability for a connection among all HMMs, i.e., a connection between a keyword and extraneous speech, and the spontaneous speech is recognized by detecting the HMM connection with the highest likelihood.

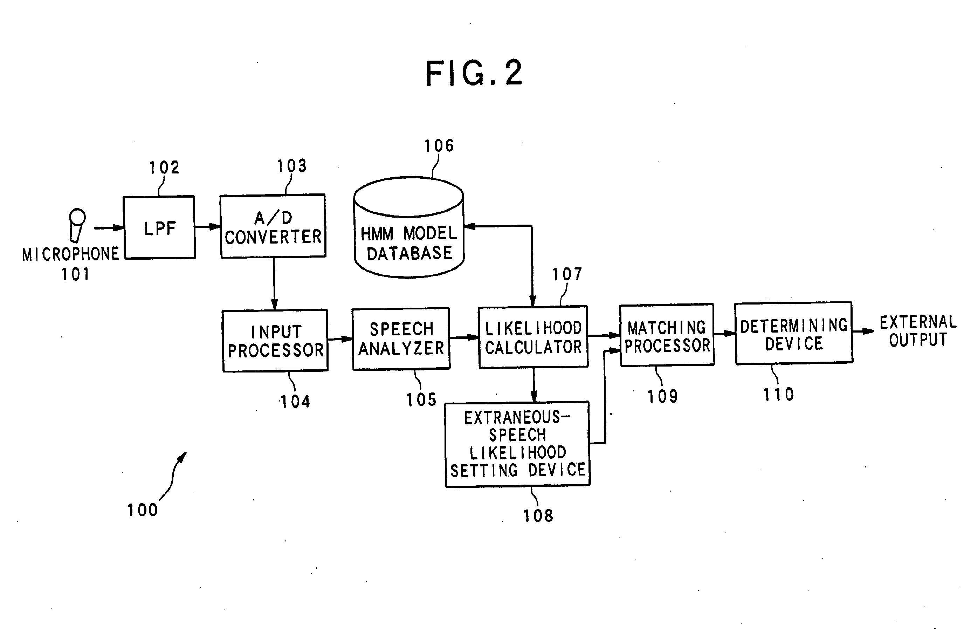

Next, configuration of the speech recognition device according to this embodiment will be described with reference to FIG. 2.

FIG. 2 is a block diagram showing a schematic configuration of a speech recognition device using word spotting according to the present invention.

As shown in FIG. 2, the speech recognition device 100 comprises: a microphone 101 for inputting spontaneous speech to be recognized; low pass filter (hereinafter referred to as the LPF) 102; analog/digital converter (hereinafter referred to as the A/D converter) 103 which coverts analog signals outputted from the microphone 101 into digital signals; input processor 104 which extracts speech signals that corresponds to speech sounds from the inputted speech signals and splits frames at a preset time interval; speech analyzer 105 which extracts a feature value of a speech signal in each frame; HMM model database 106 which prestores keyword HMMs which represent feature patterns of keywords to be recognized and HMMs of designated speech (hereinafter referred to as designated-speech HMMs) for calculating extraneous-speech likelihood described later; likelihood calculator 107 which calculates the likelihood that the extracted feature value of each frame matches each stored HMM; extraneous-speech likelihood setting device 108 which sets extraneous-speech likelihood which represents the likelihood that the extracted frame corresponds to extraneous speech based on the calculated likelihood in likelihood calculator 107; matching processor 109 which performs a matching process (described later) based on the likelihood calculated on a frame-by-frame HMMs basis; and determining device 110 which determines the keywords contained in the spontaneous speech based on the results of the matching process.

The input processor 104 and speech analyzer 105 serve as extraction device of the present invention, and the HMM model database 106 serves as database of the present invention.

Furthermore, the likelihood calculator 107 serves as calculation device, setting device, designated-speech probability calculation device, and acquisition device of the present invention, and the extraneous-speech likelihood setting device 108 serves as the setting device and extraneous-speech probability setting device of the present invention.

Furthermore, the matching processor 109 and determining device 110 serve as determination device of the present invention.

In the microphone 101, spontaneous speech is inputted, and the microphone 101 generates speech signals based on inputted spontaneous speech, and outputs them to the LPF 102.

In the LPF 102, the speech signals generated by the microphone 101 are inputted. The LPF 102 removes harmonic components from the received speech signals, and outputs the speech signals removed harmonic components to the A/D converter 103.

In the A/D converter 103, the speech signals from which harmonic components have been removed by the LPF 102 is inputted. The A/D converter 103 converts the received analog speech signals into digital signals, and outputs the digital speech signals to the input processor 104.

In the input processor 104, the digital speech signals are inputted. The input processor 104 extracts those parts of speech signals which represent speech segments of spontaneous speech from the inputted digital speech signals, divides the extracted parts of the speech signals into frames of a predetermined duration, and outputs them to the speech analyzer 105.

The input processor 104 divides the speech signals into frames, for example, at intervals of 10 ms to 20 ms.

In the speech analyzer 105, analyzes the inputted speech signals frame by frame, extracts the feature value of the speech signal in each frame, and outputs it to the likelihood calculator 107.

Specifically, the speech analyzer 105 extracts spectral envelope data that represents power at each frequency at regular time intervals or cepstrum data obtained from an inverse Fourier transform of the logarithm of the power spectrum as the feature values of speech ingredient on a frame-by-frame basis, converts the extracted feature values into vectors, and outputs the vectors to the likelihood calculator 107.

The HMM model database 106 prestores keyword HMMs which represent pattern data of the feature values of the keywords to be recognized, and pattern data of designated-speech HMMs needed to calculate extraneous-speech likelihood.

The data of these stored plurality of keyword HMMs represent patterns of the feature values of a plurality of the keywords to be recognized.

For example, if it is used in navigation system mounted in a mobile, the keyword model database 104 is designed to store HMMs which represent patterns of feature values of speech signals including destination names or present location names or facility names such as restaurant names for the mobile.

As described above, according to this embodiment, an HMM which represents a feature pattern of speech ingredient of each keyword represents a probability model which has spectral envelope data that represents power at each frequency at regular time intervals or cepstrum data obtained from an inverse Fourier transform of the logarithm of the power spectrum.

Since a keyword normally consists of a plurality of phonemes or syllables as is the case with "present location" or "destination," according to this embodiment, one keyword HMM consists of a plurality of keyword component HMMs and the likelihood calculator 107 calculates frame-by-frame feature values and likelihood of each keyword component HMM.

In this way, the HMM model database 106 stores each keyword HMMs of the keywords to be recognized, that is, keyword component HMMs.

Furthermore, the HMM model database 106 prestores HMMs (hereinafter referred to as designated-speech HMMs) which represent speech feature data (hereinafter referred to as designated-speech feature data) of vowels, which compose typical extraneous speech, as a plurality of preset designated-speech feature values.

For example, since even in extraneous speech, each syllable normally contains a vowel, the HMM model database 106 stores designated-speech HMMs which represent feature patterns of speech signals of the vowels "a," "i," "u," "e," and "o." In the likelihood calculator 107, matching is performed with these designated-speech HMMs. Beside, these vowels "a," "i," "u," "e," and "o" indicate vowels of Japanese.

In the likelihood calculator 107, the feature vector of each frame is inputted, the likelihood calculator 107 compares the feature value of each inputted frame with each feature values of keyword HMMs and each feature values of designated-speech feature data models (corresponds to the designated-speech feature values according to the present invention) stored in the HMM model database 106, thereby calculates the likelihood, which is including the probability that the frame corresponds to each keyword HMM or each designated-speech HMM stored in the HMM model database 106, based on matching between the inputted frame and each HMM, and outputs the calculated likelihood of match with the designated-speech HMMs to the extraneous-speech likelihood setting device 108, and the calculated likelihood of match with the keyword HMMs to the matching processor 109.

Specifically, the likelihood calculator 107 calculates output probabilities on a frame-by-frame basis. The output probabilities include output probability of each frame corresponding to each keyword component HMM, and output probability of each frame corresponding to a designated-speech HMM. Furthermore, the likelihood calculator 106 calculates state transition probabilities. The state transition probabilities includes the probability that a state transition from an arbitrary frame to the next frame corresponds to a state transition from a keyword component HMM to another keyword component HMM or a designated-speech HMM, and the probability that a state transition from an arbitrary frame to the next frame corresponds to a state transition from a designated-speech HMM to another designated-speech HMM or a keyword component HMM. Furthermore, the likelihood calculator 107 outputs the calculated probabilities as likelihood to the extraneous-speech likelihood setting device 108 and matching processor 109.

Incidentally, state transition probabilities include probabilities of a state transition from a keyword component HMM to the same keyword component HMM and a state transition from a designated-speech HMM to the same designated-speech HMM as well.

The likelihood calculator 107 outputs the output probabilities and state transition probabilities calculated for individual frames to the extraneous-speech likelihood setting device 108 and matching processor 109 as likelihood for the respective frames.

In the extraneous-speech likelihood setting device 108, the output probabilities and state transition probabilities calculated based on the designated speech HMM for individual frames are inputted, the extraneous-speech likelihood setting device 108 calculates the averages of the inputted output probabilities and state transition probabilities, and outputs the calculated averages to the matching processor 109 as extraneous-speech likelihood.

For example, when the designated-speech HMMs represent feature patterns of speech signals of the vowels "a," "i," "u," "e," and "o," the extraneous-speech likelihood setting device 108 averages the output probabilities and state transition probabilities for the HMM of each vowel on a frame-by-frame basis and outputs the average output probability and average state transition probability as extraneous-speech likelihood for the frames to the matching processor 109.

In the matching processor 109, the frame-by-frame output probabilities and each state transition probabilities calculated by the likelihood calculator 107 and extraneous-speech likelihood setting device 108 are inputted. The matching processor 109 performs a matching process to calculate cumulative likelihood (combination probability according to the present invention), which is the likelihood of each combination of each keyword HMM and the extraneous-speech component HMM, based on the inputted each output probabilities and each state transition probabilities, and outputs the calculated cumulative likelihood to the determining device 110

Specifically, in the matching processor 109, the extraneous-speech likelihood outputted from the extraneous-speech likelihood setting device 108 is used as extraneous-speech likelihood which represents the likelihood of a match between the feature value of the speech component in each frame and feature value of the speech component of an extraneous speech component when it is assumed that the given frame contains extraneous speech. Furthermore, the matching processor 109 calculates cumulative likelihood for every combination of a keyword and extraneous-speech by accumulating the extraneous-speech likelihood and the likelihood of keywords calculated by the likelihood calculator 107 on a frame-by-frame basis. Consequently, the matching processor 109 calculates one cumulative likelihood for each keyword (as described later).

Incidentally, details of the matching process performed by the matching processor 109 will be described later.

In the determining device 110, the cumulative likelihood of each keyword calculated by the matching processor 109 is inputted. The determining device 110 normalizes the inputted cumulative likelihood for the word length of each keyword. Specifically, the determining device 110 normalizes the inputted cumulative likelihood based on duration of the keyword used as foundation for calculating the inputted cumulative likelihood. Furthermore, the determining device 110 outputs the keyword with the highest cumulative likelihood out of the normalized likelihood as a keyword contained in the spontaneous speech.

In deciding on the keyword, the determining device 110 uses the cumulative likelihood of extraneous-speech likelihood alone as well. If the extraneous-speech likelihood used singly has the highest cumulative likelihood, the determining device 110 determines that no keyword is contained in the spontaneous speech and outputs this conclusion.

Next, description will be given about the matching process performed by the matching processor 109 according to this embodiment.

The matching process according to this embodiment calculates the cumulative likelihood of each combination of a keyword model and an extraneous-speech component model using the Viterbi algorithm.

The Viterbi algorithm is an algorithm which calculates the cumulative likelihood based on the output probability of entering each given state and the transition probability of transitioning from each state to another state, and then outputs the combination whose cumulative likelihood has been calculated after the cumulative probability.

Generally, the cumulative likelihood is calculated first by integrating each Euclidean distance between the state represented by the feature value of each frame and the feature value of the state represented by each HMM, and then is calculated by calculating the cumulative distance.

Specifically, the Viterbi algorithm calculates cumulative probability based on a path which represents a transition from an arbitrary state i to a next state j, and thereby extracts each paths, i.e., connections and combinations of HMMs, through which state transitions can take place.

In this embodiment, the likelihood calculator 107 and the extraneous-speech likelihood calculating section 108 calculate each output probabilities and each state transition probabilities by matching the output probabilities of keyword models or the extraneous-speech component model and thereby state transition probabilities against the frames of the inputted spontaneous speech one by one beginning with the first divided frame and ending with the last divided frame, calculates the cumulative likelihood of an arbitrary combination of a keyword model and extraneous-speech components from the first divided frame to the last divided frame, determines the arrangement which has the highest cumulative likelihood in each keyword model/extraneous-speech component combination by each keyword model, and outputs the determined cumulative likelihoods of the keyword models one by one to the determining device 110.

For example, in case where the keywords to be recognized are "present location" and "destination" and the inputted spontaneous speech entered is "er, present location", the matching process according to this embodiment is performed as follows.

It is assumed here that extraneous speech is "er," that extraneous-speech likelihood has been set in advance, that the keyword database contains HMMs of each syllables of "present" and "destination," and that each output probabilities and state transition probabilities calculated by the likelihood calculator 107 and extraneous-speech likelihood setting device 108 has already been inputted in the matching processor 109.

In such a case, according to this embodiment, the Viterbi algorithm calculates cumulative likelihood of all arrangements in each combination of the keyword and extraneous-speech components for the keywords "present" and "destination" based on the output probabilities and state transition probabilities.

The Viterbi algorithm calculates the cumulative likelihoods of all combination patterns over all the frame of spontaneous speech beginning with the first frame for each keyword, in this case, "present location" and "destination."

Furthermore, in the process of calculating the cumulative likelihoods of each arrangement for each keyword, the Viterbi algorithm stops halfway for those arrangements which have low cumulative likelihood, determining that the spontaneous speech do not match those combination patterns.

Specifically, in the first frame, either the likelihood of the HMM of "p," which is a keyword component HMM of the keyword "present location," or the likelihood of the extraneous-speech set in advance is included in the calculation of the cumulative likelihood. In this case, a higher cumulative likelihood provides the calculation of the next cumulative likelihood.

In this case, the extraneous-speech likelihood is higher than the likelihood of the keyword component HMM of "p," and thus calculation of the cumulative likelihood for "present#" is terminated after "p" (where * indicates extraneous-speech likelihood).

Thus, in this type of matching process, only one cumulative likelihood is calculated for each of the keywords "present" and "destination."

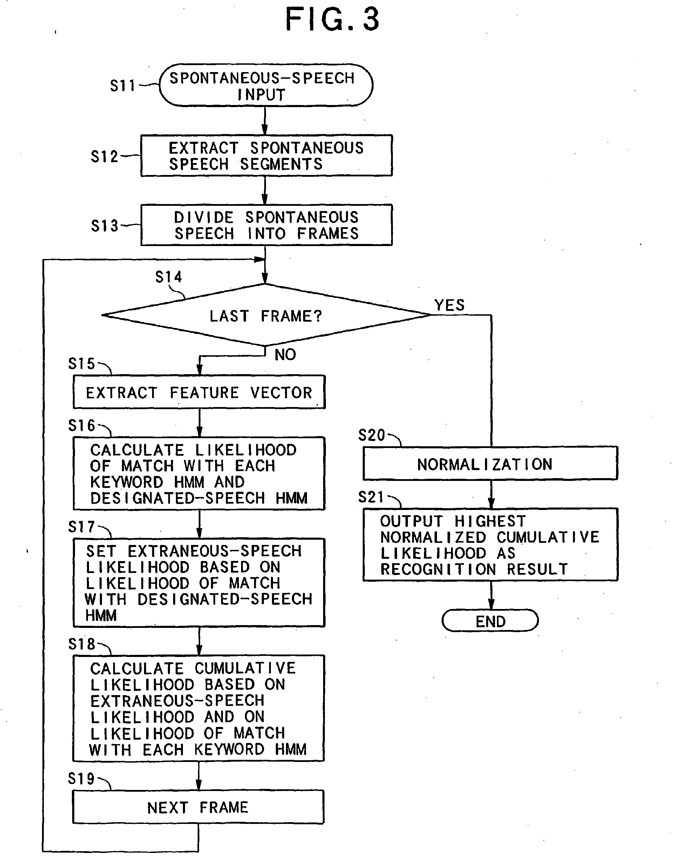

Next, a keyword recognition process according to this embodiment will be described with reference to FIG. 3.

FIG. 3 is a flowchart showing operation of the keyword recognition process according to this embodiment.

First, when a control panel or controller (not shown) instructs each component to start a keyword recognition process and spontaneous speech enters the microphone 101 (Step S11), the spontaneous speech is inputted the input processor 104 via the LPF 102 and A/D converter 103, and the input processor 104 extracts speech signals of the spontaneous speech from inputted speech signals (Step S12). Next, the input processor 104 divides the extracted speech signals into frames of a predetermined duration, and outputs the speech signals to the speech analyzer 105 on a frame-by-frame basis beginning with the first frame (Step S13).

Then, in this keyword recognition process, the following processes are performed on a frame-by-frame basis.

First, the controller (not shown) judges whether the frame inputted in the speech analyzer 105 is the last frame (Step S14). If it is, the flow goes to Step S20. On the other hand, if the frame is not the last one, the following processes are performed.

Then, the speech analyzer 105 extracts the feature value of the speech signal in the received frame, and outputs it to the likelihood calculator 107 (Step S15).

Specifically, based on the speech signal in each frame, the speech analyzer 105 extracts spectral envelope information that represents power at each frequency at regular time intervals or cepstrum information obtained from an inverse Fourier transform of the logarithm of the power spectrum as the feature values of speech ingredient, converts the extracted feature values into vectors, and outputs the vectors to the likelihood calculator 107.

Next, the likelihood calculator 107 compares the inputted feature value of the frame with the feature values of the keyword HMMs and designated-speech HMMs stored in the HMM model database 106, calculates the output probabilities and state transition probabilities of the frame for each HMM, and outputs the output probabilities and state transition probabilities for the designated-speech HMMs to the extraneous-speech likelihood setting device 108, and the output probabilities and state transition probabilities for the keyword HMMs to the matching processor 109 (Step S16).

Next, the extraneous-speech likelihood setting device 108 sets extraneous-speech likelihood based on the inputted output probabilities and the inputted state transition probabilities for the designated-speech HMMs (Step S17).

For example, when the designated-speech HMMs represent feature patterns of speech signals of the vowels "a," "i," "u," "e," and "o," the extraneous-speech likelihood setting device 108 averages, on a frame-by-frame basis, the output probabilities and state transition probabilities calculated based on the feature value of each frame and HMM of each vowel, and outputs the average output probability and average state transition probability as extraneous-speech likelihood for the frame to the matching processor 109.

Next, based on the output probabilities and state transition probabilities calculated by the likelihood calculator 107, and the output probabilities and state transition probabilities calculated by the extraneous-speech likelihood setting device 108, the matching processor 109 performs the matching process (described above) and calculates the cumulative likelihood of each keyword (Step S18).

Specifically, the matching processor 109 integrates the cumulative likelihood for every keyword by adding the inputted cumulative likelihood of keyword HMM and extraneous-speech likelihood to cumulative likelihood calculated heretofore, but eventually calculates only the highest cumulative likelihood for each keyword.

Next, at the instruction of the controller (not shown), the matching processor 109 controls input of the next frame (Step S19) and returns to Step S14.

On the other hand, if the controller (not shown) judges that the given frame is the last frame, the highest cumulative likelihood for each keyword is output to the determining device 110, which then normalizes the cumulative likelihood for the word length of each keyword (Step S20).

Finally, based on the normalized cumulative likelihood of each keyword, the determining device 110 outputs the keyword with the highest cumulative likelihood as the keyword contained in the spontaneous speech (Step S21). This ends the operation.

Thus, according to this embodiment, since the likelihood of a . match between the spontaneous-speech feature values and keyword feature data for each frame of speech segment is calculated, extraneous-speech likelihood is set based on designated feature data such as vowels, and the keyword contained in the spontaneous speech is determined based on these likelihood, extraneous-speech likelihood can be calculated by using a small amount of data without the need to preset an enormous amount of extraneous-speech feature data which is conventionally needed to calculate extraneous-speech probability. As a result, the processing load needed to calculate extraneous-speech likelihood can be reduced in this embodiment.

Furthermore, in this embodiment, since the cumulative likelihood for every combination of extraneous-speech likelihood and calculated likelihood is calculated by accumulating the extraneous-speech likelihood and each calculated likelihood, and the keyword contained in the spontaneous speech is determined based on the calculated cumulative likelihood, the keyword contained in the spontaneous speech can be determined based on every combination of extraneous-speech likelihood and each calculated likelihood.

Therefore, it is possible to easily recognize the keyword contained in the spontaneous speech properly at high speed and prevent misrecognition.

Furthermore, in this embodiment, when recognizing two or more keywords contained in spontaneous speech, it possible to recognize the keywords contained in the spontaneous speech more easily at a higher speed and prevent misrecognition.

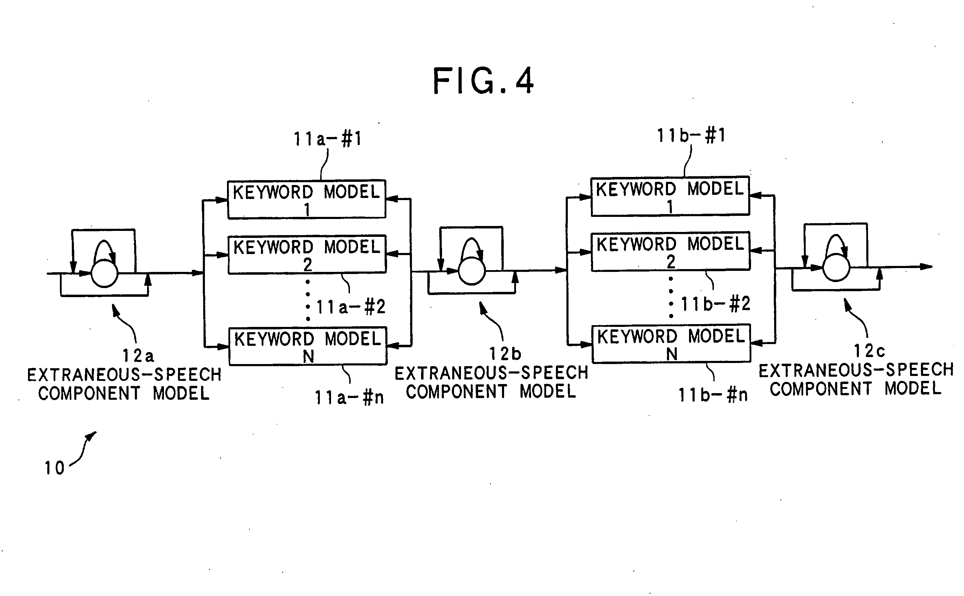

For example, when recognizing two keywords using an HMM-based speech language model 20, such as the one shown in FIG. 4, the two keywords can be recognized simultaneously if word lengths in the keyword models to be recognized are normalized.

Specifically, instead of calculating cumulative likelihood for each keyword in the matching processor 109, if the matching processor 109 calculates cumulative likelihood for every combination of keywords contained in the HMM model database 106, and the determining device 110 normalizes word length by adding the word lengths of all the keywords, it is possible to recognize two or more keywords simultaneously, recognize the keyword contained in the spontaneous speech easily at high speed, and prevent misrecognition.

Incidentally, although designated-speech HMMs for only the vowels "a," "i," "u," "e," and "o" are used in this embodiment, the keyword component HMMs described above may be used as designated-speech HMMs and matched with the keyword component HMMs of the above vowels.

In that case, the likelihood calculator 107 calculates the output probabilities and state transition probabilities for each inputted frame and each keyword component HMM, and output each calculated values of the probabilities to the extraneous-speech likelihood setting device 108. Then, the extraneous-speech likelihood setting device 108 calculates the averages of high (e.g., top 5) output probabilities and state transition probabilities, and outputs the calculated average output probability and average state transition probability to the matching processor 109 as extraneous-speech likelihood.

Therefore, as is the above case, since extraneous-speech probability can be set by using a small amount of data without the need to preset an enormous amount of extraneous-speech feature data which is conventionally needed to calculate extraneous-speech likelihood, it is possible to reduce the processing load needed to calculate extraneous-speech probability and recognize the keywords contained in spontaneous speech easily at high speed.

Furthermore, although the keyword recognition process is performed by the speech recognition device according to this embodiment, the speech recognition device may be equipped with a computer and recording medium and a similar keyword recognition process may be performed as the computer reads a keyword recognition program stored on the recording medium.

Here, a DVD or CD may be used as the recording medium and the speech recognition device may be equipped with a reader for reading the program from the recording medium.

### [Second embodiment]

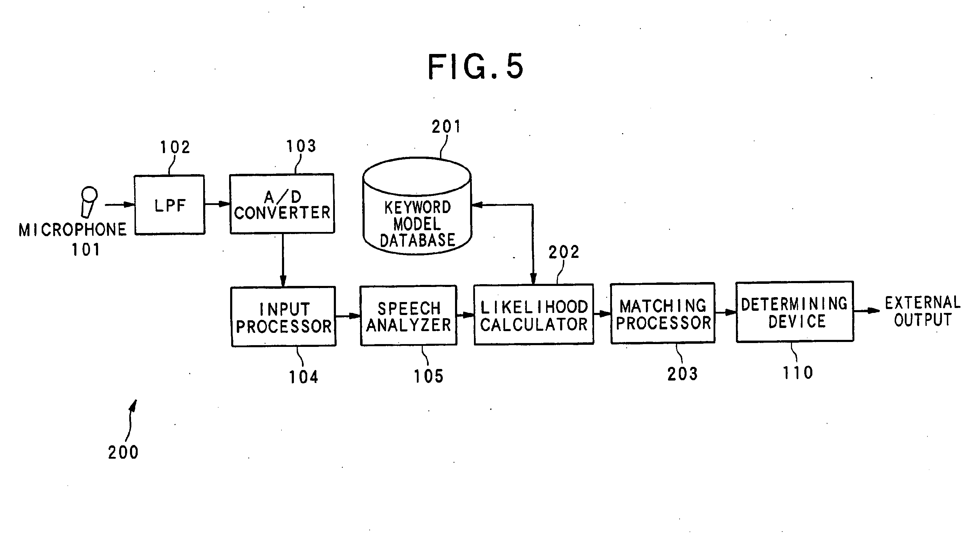

FIGS. 5 to 6 are diagrams showing a speech recognition device according to a second embodiment.

In this embodiment, keywords are recognized based on keyword HMMs and predetermined fixed values indicating extraneous-speech likelihood instead of recognizing keyword based on keyword HMMs and designated-speech HMMs which indicates extraneous-speech likelihood in the first embodiment.

Specifically, according to this embodiment, cumulative likelihood of every combination of a keyword model and the extraneous-speech likelihood are calculated every keyword based on extraneous-speech likelihood output probabilities, and state transition probabilities, and the matching process is performed by using the Viterbi algorithm.

For example, to recognize "present" and "destination" as keywords in arbitrary spontaneous speech, a matching process is performed by calculating cumulative likelihood of all the following arrangements based on extraneous-speech likelihood, output probabilities, and state transition probabilities: "present," "#present," "present#," and "#present#" as well as "destination," "#destination," "destination#," and "#destination#" (where # indicates a fixed value of extraneous-speech likelihood).

In other respects, the configuration of this embodiment is similar to that of the first embodiment except recognizing keyword based on keyword HMM and predetermined fixed values.

As shown in FIG. 5, a speech recognition device 200 comprises a microphone 101, LPF 102, A/D converter 103, input processor 104, speech analyzer 105, keyword model database 201 which prestores keyword HMMs which represent feature patterns of keywords to be recognized, likelihood calculator 202 which calculates the likelihood that the extracted feature value of each frame matches the keyword HMMs, matching processor 203 which performs a matching process based on the calculated frame-by-frame likelihood of a match with each keyword HMM and on preset likelihood of extraneous speech which does not constitute any keyword, and determining device 110.

The input processor 104 and speech analyzer 105 save as extraction device of the present invention, and the keyword model database 201 save as first database of the present invention.

Furthermore, the likelihood calculator 202 serves as calculation device and first acquisition device of the present invention, the matching processor 108 serves as second database, second acquisition device, and determination device, and the determining device 109 serves as determination device of the present invention.

The keyword model database 201 prestores keyword HMMs which represent feature pattern data of keywords to be recognized. The stored keyword HMMs represent feature patterns of respective keywords to be recognized.

For example, if it is used in navigation system mounted a mobile, the keyword model database 201 is designed to store HMMs which represent patterns of feature values of speech signals including destination names or present location names or facility names such as restaurant names for the mobile.

As described above, according to this embodiment, an HMM which represents a feature pattern of speech ingredient of each keyword represents a probability model which has spectral envelope data that represents power at each frequency at regular time intervals or cepstrum data obtained from an inverse Fourier transform of the logarithm of the power spectrum.

Since a keyword normally consists of a plurality of phonemes or syllables as is the case with "present location" or "destination," according to this embodiment, one keyword HMM consists of a plurality of keyword component HMMs and the likelihood calculator 202 calculates frame-by-frame feature values and likelihood of each keyword component HMM.

In this way, the keyword model database 201 stores each keyword HMMs of the keywords to be recognized, that is, keyword component HMMs.

In the likelihood calculator 202, the feature vector of each frame is inputted, and likelihood calculator 202 calculates the likelihood by matching between each inputted HMM of each frame and each feature values of HMMs stored in each databases based on the inputted the feature vector of each frame, and outputs the calculated likelihood to the matching processor 203.

According to this embodiment, the likelihood calculator 202 calculates probabilities, including the probability of each frame corresponding to each HMM stored in the keyword model database 201 based on the feature values of each frames and the feature values of the HMMs stored in the keyword model database 201.

Specifically, the likelihood calculator 202 calculates output probability which represents the probability of each frame corresponding to each keyword component HMM. furthermore, it calculates state transition probability which represents the probability that a state transition from an arbitrary frame to the next frame corresponds to a state transition from a keyword component HMM to another keyword component HMM. Then, the likelihood calculator 202 outputs the calculated probabilities as likelihood to the matching processor 108.

Incidentally, state transition probabilities include probabilities of a state transition from each keyword component HMM to the same keyword component HMM.

The likelihood calculator 202 outputs the output probability and state transition probability calculated for each frame as likelihood for the frame to the matching processor 203.

In the matching processor 203, the frame-by-frame output probabilities and state transition probabilities calculated by the likelihood calculator 202 are inputted. The matching processor 203 performs a matching process to calculate cumulative likelihood which is the likelihood of each combination of a keyword HMM and extraneous-speech likelihood based on the inputted output probabilities, the inputted output state transition probabilities, and the extraneous-speech likelihood, and outputs the cumulative likelihood to the determining device 110.

Specifically, the matching processor 203 prestores the output probabilities and state transition probabilities which represent extraneous-speech likelihood. This extraneous-speech likelihood indicates a match between the feature values of the speech component contained spontaneous speech in each frame and feature value of the speech component of an extraneous speech when it is assumed that the given frame is a frame of extraneous speech component. Furthermore, the matching processor 203 calculates cumulative likelihood for every combination of a keyword and extraneous-speech by accumulating the extraneous-speech likelihood and the likelihood of keywords calculated by the likelihood calculator 202 on a frame-by-frame basis. Consequently, the matching processor 203 calculates cumulative likelihood of each keyword (as described later) as well as cumulative likelihood without a keyword.

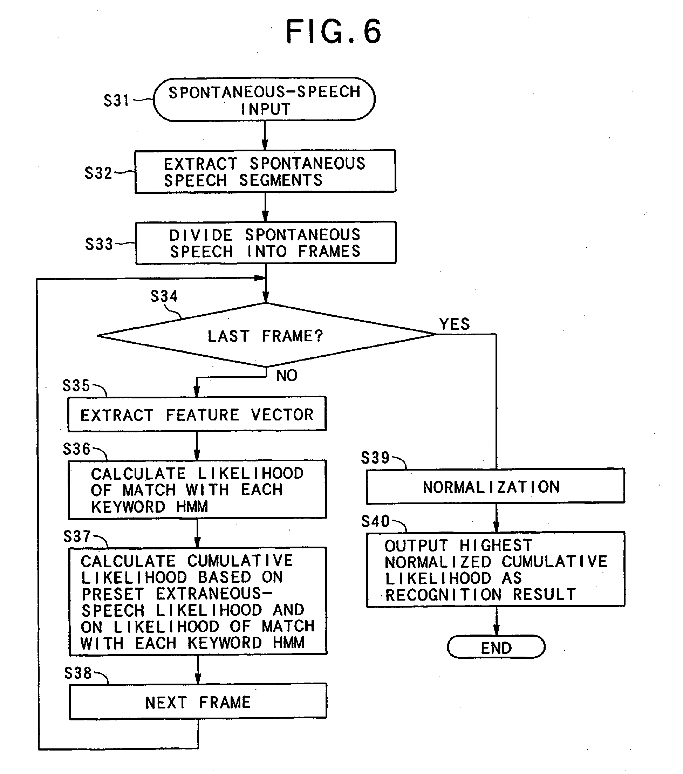

Next, a keyword recognition process according to this embodiment will be described with reference to FIG. 6.

FIG. 6 is a flowchart showing operation of the keyword recognition process according to this embodiment.

First, when a control panel or controller (not shown) instructs each component to start a keyword recognition process and spontaneous speech enters the microphone 101 (Step S31), the spontaneous speech is inputted the input processor 104 via the LPF 102 and A/D converter 103, and the input processor 104 extracts speech signals of the spontaneous speech from inputted speech signals (Step S32). Next, the input processor 104 divides the extracted speech signals into frames of a predetermined duration, and outputs the speech signals to the speech analyzer 105 on a frame-by-frame basis beginning with the first frame (Step S33).

Then, in this keyword recognition process, the following processes are performed on a frame-by-frame basis.

First, the controller (not shown) judges whether the frame inputted in the speech analyzer 105 is the last frame (Step S34). If it is, the flow goes to Step S39. On the other hand, if the frame is not the last one, the following processes are performed.

Then, the speech analyzer 105 extracts the feature value of the speech signal in the received frame, and outputs it to the likelihood calculator 202 (Step S35).

Specifically, based on the speech signal in each frame, the speech analyzer 105 extracts spectral envelope information that represents power at each frequency at regular time intervals or cepstrum information obtained from an inverse Fourier transform of the logarithm of the power spectrum as the feature values of speech ingredient, converts the extracted feature values into vectors, and outputs the vectors to the likelihood calculator 202.

Then, the likelihood calculator 202 compares the inputted feature value of the frame with the feature values of the HMMs stored in the keyword model database 201, calculates the output probabilities and state transition probabilities of the frame for each HMM, and outputs them to the matching processor 203 (Step S36).

Next, based on the output probabilities and state transition probabilities calculated by the likelihood calculator 202, and the preset extraneous-speech likelihood stored in the matching processor 203, the matching processor 203 performs the matching process (described above) and calculates the cumulative likelihood of each keyword (Step S37).

Specifically, the matching processor 203 integrates the cumulative likelihood for every keyword by adding the inputted cumulative likelihood of keyword HMM and extraneous-speech likelihood to cumulative likelihood calculated heretofore, but eventually calculates only the highest cumulative likelihood for each keyword.

Next, at the instruction of the controller (not shown), the matching processor 109 controls input of the next frame (Step S38) and returns to Step S34.

On the other hand, if the controller (not shown) judges that the given frame is the last frame, the highest cumulative likelihood for each keyword is output to the determining device 110, which then normalizes the cumulative likelihood for the word length of each keyword (Step S39).

Finally, based on the normalized cumulative likelihood of each keyword, the determining device 110 outputs the keyword with the highest cumulative likelihood as the keyword contained in the spontaneous speech (Step S40). This ends the operation.

Thus, according to this embodiment, since the likelihood of a match between the spontaneous-speech feature values and keyword feature data for each frame of speech segment is calculated, and the keyword contained in the spontaneous speech is determined based on the calculated likelihood and the preset extraneous-speech likelihood, the keyword contained in the spontaneous speech can be determined without calculating extraneous-speech likelihood

Furthermore, in this embodiment, since the cumulative likelihood for every combination of extraneous-speech likelihood and calculated likelihood is calculated by accumulating the extraneous-speech likelihood and each calculated likelihood, and the keyword contained in the spontaneous speech is determined based on the calculated cumulative likelihood, the keyword contained in the spontaneous speech can be determined based on every combination of extraneous-speech likelihood and each calculated likelihood.

Therefore, it is possible to easily recognize the keyword contained in the spontaneous speech properly at high speed and prevent misrecognition.

Furthermore, in this embodiment, when recognizing two or more keywords contained in spontaneous speech, it is possible to recognize the keywords contained in the spontaneous speech more easily at a higher speed and prevent misrecognition.

For example, when recognizing two keywords using an HMM-based speech language model 20, such as the one shown in FIG. 4, the two keywords can be recognized simultaneously if word lengths in the keyword models to be recognized are normalized.

Specifically, instead of calculating cumulative likelihood for each keyword in the matching processor 203, if the matching processor 203 calculates cumulative likelihood for every combination of keywords contained in the keyword model database 201, and the determining device 110 normalizes word length by adding the word lengths of all the keywords, it is possible to recognize two or more keywords simultaneously, recognize the keyword contained in the spontaneous speech easily at high speed, and prevent misrecognition.

Furthermore, although the keyword recognition process is performed by the speech recognition device according to this embodiment, the speech recognition device may be equipped with a computer and recording medium and a similar keyword recognition process may be performed as the computer reads a keyword recognition program stored on the recording medium.

Here, a DVD or CD may be used as the recording medium and the speech recognition device may be equipped with a reader for reading the program from the recording medium.

The invention may be embodied in other specific forms. The present embodiments are therefore to be considered in all respects as illustrative and not restrictive, the scope of the invention being indicated by the appended claims rather than by the foregoing description.

## Claims

1. A speech recognition apparatus for recognizing at least one of keywords contained in uttered spontaneous speech, said apparatus comprising :
an extraction device (104,105) for extracting a spontaneous-speech feature value, which is feature value of a speech ingredient of the spontaneous speech, by analyzing the spontaneous speech;
a database (106, 201) for storing a keyword feature data which represents the feature value of the speech ingredient of a keyword;
a calculation device (107, 202) for calculating a keyword probability which represents the probability that said spontaneous-speech feature value corresponds to said keyword based on at least part of a speech segment extracted from the spontaneous speech and the keyword feature data stored in said database (106, 201);
a setting device (107, 108, 202) for setting an extraneous-speech probability which represents the probability that at least part of the speech segment extracted from the spontaneous-speech corresponds to extraneous speech based on a preset value, said extraneous speech indicating a non-keyword; and
a determination device (109, 110, 203) for determining said keyword contained in the spontaneous speech based on the calculated keyword probabilities and the extraneous-speech probability which is the preset value, wherein said setting device (202) sets a preset value representing a fixed value as said extraneous-speech probability.

2. A speech recognition method of recognizing at least one of keywords contained in uttered spontaneous speech, wherein said method comprises:
an extraction process of extracting a spontaneous-speech feature value, which is feature value of a speech ingredient of the spontaneous speech, by analyzing the spontaneous speech;
a calculation process of calculating a keyword probability which represents the probability that said spontaneous-speech feature value corresponds to said keyword based on at least part of a speech segment extracted from the spontaneous speech and a keyword feature data stored in a database (106, 201), said keyword feature data representing a feature value of the speech ingredient of a keyword;
a setting process of setting extraneous-speech probability which represents the probability that at least part of the speech segment extracted from the spontaneous-speech corresponds to extraneous speech based on a preset value, said extraneous speech indicating a non-keyword; and
a determination process of determining the keyword contained in the spontaneous speech based on the calculated keyword probabilities and the extraneous-speech probability which is the preset value wherein said setting process sets the preset value representing a fixed value as said extraneous-speech probability.

## Patentansprüche

1. Spracherkennungsgerät zum Erkennen wenigstens eines von Schlüsselwörtern, die in einer geäußerten, spontanen Sprache enthalten sind, wobei das Gerät enthält:
eine Extraktionsvorrichtung (104, 105), die einen Spontansprachen-Merkmalswert, der ein Merkmalswert eines Sprachbestandteils der spontanen Sprache ist, durch Analysieren der spontanen Sprache extrahiert;
einen Datenbank (106, 201), die eine Schlüsselwortmerkmal-Dateneinheit speichert, die den Merkmalswert des Sprachbestandteils eines Schlüsselwortes repräsentiert;
eine Berechungsvorrichtung (107, 202), die eine Schlüsselwort-Wahrscheinlichkeit berechnet, die die Wahrscheinlichkeit repräsentiert, dass der Spontansprachen-Merkmalswert dem Schlüsselwort entspricht, basierend auf wenigstens einem Teil eines Sprachsegmentes, das aus der spontanen Sprache extrahiert wird, und den Schlüsselwort-Markmalsdaten, die in der Datenbank (106, 201) gespeichert sind;
eine Einstellvorrichtung (107, 108, 202), die eine Irrelevanz-Sprachen-Wahrscheinlichkeit einstellt, die die Wahrscheinlichkeit repräsentiert, dass wenigstens ein Teil des Sprachsegmentes, das aus der Spontansprache extrahiert wird, einer irrelevanten Sprache entspricht, basierend auf einem voreingestellten Wert, wobei die irrelevante Sprache ein Nicht-Schlüsselwort kennzeichnet; und
eine Bestimmungsvorrichtung (109, 110, 203) zum Bestimmen des Schlüsselwortes, das in der spontanen Sprache enthalten ist, auf der Basis der berechneten Schlüsselwortwahrscheinlichkeiten und der Irrelevanz-Sprachen-Wahrscheinlichkeit, die der voreingestelle Wert ist, wobei die Einstellvorrichtung (202) einen voreingestellten Wert einstellt, der einen unveränderlichen Wert als Irrelevanz-Sprachen-Wahrscheinlichkeit repräsentiert.

2. Spracherkennungsverfahren zum Erkennen wenigstens eines von Schlüsselwörtem, die in geäußerter, spontaner Sprache enthalten sind, wobei das Verfahren umfasst:
einen Extraktionsvorgang, der einen Spontansprachen-Merkmalswert, der ein Merkmalswert eines Sprachbestandteils der spontanen Sprache ist, durch Analysieren der spontanen Sprache extrahiert;
einen Berechungsvorgang, der eine Schlüsselwort-Wahrscheinlichkeit berechnet, die die Wahrscheinlichkeit repräsentiert, dass der Spontansprachen-Merkmalswert dem Schlüsselwort entspricht, basierend auf wenigstens einem Teil eines Sprachsegmentes, das aus der spontanen Sprache extrahiert wird, und einer Schlüsselwort-Markmalsdateneinheit, die in der Datenbank (106, 201) gespeichert ist, wobei die Schlüsselwort-Merkmalsdaten einen Merkmalswert des Sprachbestandteils eines Schlüsselwortes repräsentieren;
einen Einstellvorgang, der eine Irrelevanz-Sprachen-Wahrscheinlichkeit einstellt, die die Wahrscheinlichkeit repräsentiert, dass wenigstens ein Teil des Sprachsegmentes, das aus der Spontansprache extrahiert wird, einer irrelevanten Sprache entspricht, basierend auf einem voreingestellten Wert, wobei die irrelevante Sprache ein Nicht-Schlüsselwort kennzeichnet; und
einen Bestimmungsvorgang zum Bestimmen des Schlüsselwortes, das in der spontanen Sprache enthalten ist, auf der Basis der berechneten Schlüsselwortwahrscheinlichkeiten und der Irrelevanz-Sprachen-Wahrscheinlichkeit, die der voreingestelle Wert ist, wobei die Einstellvorrichtung (202) den voreingestellten Wert einstellt, der einen unveränderlichen Wert als Irrelevanz-Sprachen-Wahrscheinlichkeit repräsentiert.

## Revendications

1. Dispositif de reconnaissance vocale pour reconnaître au moins l'un de mots clés contenus dans une parole spontanée prononcée, ledit dispositif comprenant :
un dispositif d'extraction (104, 105) pour extraire une valeur de caractéristique de parole spontanée, qui est une valeur de caractéristique d'un ingrédient de parole de la parole spontanée, en analysant la parole spontanée ;
une base de données (106, 201) pour mémoriser des données de caractéristique de mot clé qui représentent la valeur de caractéristique de l'ingrédient de parole d'un mot clé ;
un dispositif de calcul (107, 202) pour calculer une probabilité de mot clé qui représente la probabilité que ladite valeur de caractéristique de parole spontanée corresponde audit mot clé sur la base d'au moins une partie d'un segment de parole extrait de la parole spontanée et des données de caractéristique de mot clé mémorisées dans ladite base de données (106, 201) ;
un dispositif de définition (107, 108, 202) pour définir une probabilité de parole extrinsèque qui représente la probabilité qu'au moins une partie du segment de parole extrait de la parole spontanée corresponde à une parole extrinsèque sur la base d'une valeur prédéterminée, ladite parole extrinsèque indiquant un mot qui n'est pas un mot clé ; et
un dispositif de détermination (109, 110, 203) pour déterminer ledit mot clé contenu dans la parole spontanée sur la base des probabilités de mot clé calculées et de la probabilité de parole extrinsèque qui est la valeur prédéterminée, dans lequel ledit dispositif de définition (202) définit une valeur prédéterminée représentant une valeur fixée en tant que dite probabilité de parole extrinsèque.

2. Procédé de reconnaissance vocale pour reconnaître au moins l'un de mots clés contenus dans une parole spontanée prononcée, dans lequel ledit procédé comprend :
un processus d'extraction pour extraire une valeur de caractéristique de parole spontanée qui est une valeur de caractéristique d'un ingrédient de parole de la parole spontanée, en analysant la parole spontanée ;
un processus de calcul pour calculer une probabilité de mot clé qui représente la probabilité que ladite valeur de caractéristique de parole spontanée corresponde audit mot clé sur la base d'au moins une partie d'un segment de parole extrait de la parole spontanée et de données de caractéristique de mot clé mémorisées dans une base de données (106, 201), lesdites données de caractéristique de mot clé représentant une valeur de caractéristique de l'ingrédient de parole d'un mot clé ;
un processus de définition pour définir une probabilité de parole extrinsèque qui représente la probabilité qu'au moins une partie du segment de parole extrait de la parole spontanée corresponde à une parole extrinsèque sur la base d'une valeur prédéterminée, ladite parole extrinsèque indiquant un mot qui n'est pas un mot clé ; et
un processus de détermination pour déterminer le mot clé contenu dans la parole spontanée sur la base des probabilités de mot clé calculées et de la probabilité de parole extrinsèque qui est la valeur prédéterminée, dans lequel ledit processus de définition définit la valeur prédéterminée représentant une valeur fixée en tant que dite probabilité de parole extrinsèque.
